# EUROPÄISCHE PATENTSCHRIFT

(11) **EP 1 315 594 B1**
(45) Veröffentlichungstag und Bekanntmachung des Hinweises auf die Patenterteilung: **11.07.2007**
(21) Anmeldenummer: 01969240.9
(22) Anmeldetag: 11.08.2001
(51) Int. Cl.: B23K 35/00

(54) **VERFAHREN ZUR HERSTELLUNG EINER ELEKTRISCH LEITENDEN KONTAKTSCHICHT AUF EINEM METALLISCHEN SUBSTRAT FÜR EINE BRENNSTOFFZELLE**
METHOD FOR PRODUCING AN ELECTROCONDUCTIVE CONTACT LAYER ON A METALLIC SUBSTRATE FOR A FUEL CELL
PROCEDE POUR LA PRODUCTION D'UNE COUCHE DE CONTACT ELECTROCONDUCTRICE SUR UN SUBSTRAT METALLIQUE POUR UNE PILE A COMBUSTIBLE

(30) Priorität: 18.08.2000 DE 10040499
(43) Veröffentlichungstag der Anmeldung: 04.06.2003
(73) Patentinhaber: Forschungszentrum Jülich GmbH, 52425 Jülich (DE)
(72) Erfinder: DIEKMANN, Uwe, 63067 Offenbach (DE); GÖBBELS, Heinz, 52249 Eschweiler (DE); SIGISMUND, Egon, 52080 Aachen (DE)
(86) Internationale Anmeldenummer: PCT/DE2001/003116
(87) Internationale Veröffentlichungsnummer: WO 2002/014011

(56) Entgegenhaltungen:
- DE-C- 4 410 711
- US-A- 3 337 947
- US-A- 3 416 218
- US-A- 3 471 677
- US-A- 5 100 049

## Beschreibung

Die Erfindung betrifft ein Verfahren zur Herstellung einer elektrisch leitenden Kontaktschicht auf einem metallischen Substrat, welches insbesondere in einer Hochtemperatur-Brennstoffzelle (SOFC) eingesetzt wird.

Eine Brennstoffzelle weist eine Kathode, einen Elektrolyten sowie eine Anode auf. Der Kathode wird ein oxidationsmittel, z. B. Luft und der Anode wird ein Brennstoff, z. B. Wasserstoff zugeführt.

Verschiedene Brennstoffzellentypen sind bekannt, so beispielsweise die SOFC-Brennstoffzelle aus der Druckschrift DE 44 30 958 C1 sowie die PEM-Brennstoffzelle aus der Druckschrift DE 195 31 852 C1.

Die SOFC-Brennstoffzelle wird auch Hochtemperatur-Brennstoffzelle genannt, da ihre Betriebstemperatur bis zu 1000 °C beträgt. An der Kathode einer Hochtemperatur-Brennstoffzelle bilden sich in Anwesenheit des Oxidationsmittels Sauerstoffionen. Die Sauerstoffionen passieren den Elektrolyten und rekombinieren auf der Anodenseite mit dem vom Brennstoff stammenden Wasserstoff zu Wasser. Mit der Rekombination werden Elektronen freigesetzt und so elektrische Energie erzeugt.

Mehrere Brennstoffzellen werden in der Regel zur Erzielung großer elektrischer Leistungen durch verbindende Elemente elektrisch und mechanisch miteinander verbunden. Ein Beispiel für ein solches verbindendes Element stellt die aus DE 44 10 711 C1 bekannte bipolare Platte dar. Mittels bipolarer Platten entstehen übereinander gestapelte, elektrisch in Serie geschaltete Brennstoffzellen. Diese Anordnung wird Brennstoffzellenstapel genannt. Sie bestehen aus den bipolaren Platten und den Elektroden-Elektrolyt-Einheiten.

Das Stapeln eines Brennstoffzellenstapels geschieht durch einen Fügeprozeß. Dabei werden die bipolaren Platten und die Elektroden-Elektrolyt-Einheiten unter Druck zusammengefügt.

Bekannte metallische bipolare Platten mit einem hohen Cr-Gehalt bilden durch Verdampfen von Chrom leitende Chromoxid-Deckschichten aus und führen nachteilig zu Alterungserscheinungen innerhalb der Brennstoffzelle.

Metallische bipolare Platten mit einem hohen Aluminiumgehalt bilden Al₂O₃-Deckschichten aus, die nachteilig wie ein elektrischer Isolator wirken.

Ferner ergeben sich beim Fügeprozeß zwischen den bekannten starren metallischen bipolaren Platten und den Elektroden-Elektrolyt-Einheiten regelmäßig unregelmäßige Kontakte aufgrund von Fertigungstoleranzen in der bipolaren Platte bzw. der Elektroden-Elektrolyt-Einheit, was zudem zu einer erhöhten Bruchgefahr führen kann.

Aufgabe der Erfindung ist es, ein Verfahren zur Herstellung einer langzeitstabilen elektrischen Kontaktschicht auf einem metallischen Substrat zu schaffen, welche insbesondere unter Betriebsbedingungen einer Hochtemperatur-Brennstoffzelle Langzeitstabilität zeigt.

Die Aufgabe wird gelöst durch ein Herstellungsverfahren für eine elektrische Kontaktschicht gemäß Hauptanspruch. Vorteilhafte Ausführungsformen ergeben sich aus den darauf rückbezogenen Unteransprüchen.

Das Herstellungsverfahren nach Anspruch 1 schafft eine elektrisch leitende Kontaktschicht auf einem metallischen Substrat, insbesondere einer bipolaren Platte und/oder einer Elektrode einer Brennstoffzelle. Zur erfindungsgemäßen Herstellung einer Kontaktschicht auf diesen beiden Substraten wird zunächst eine Aluminium aufweisende Zwischenschicht und anschließend ein Silberkontaktelement aufgebracht. Vorteilhaft wird die Aluminium aufweisende Zwischenschicht in Form eines dünnen Blechs oder einer Folie eingebracht. Das Schichtsystem aus dem Substrat, der Aluminium aufweisenden Zwischenschicht und dem Silberkontaktelement wird unter Vakuumbedingungen erhitzt. Dabei werden Temperaturen im Bereich von 850° - 950 °C, insbesondere um 900 °C eingestellt. Das Erhitzen bei der maximalen Temperatur dauert nur wenige Minuten, insbesondere ca. 2 min. Dabei kommt es zu einer eutektischen Lötverbindung (Lötsystem) zwischen dem Silber des Silberkontaktelements und dem Aluminium aus der Zwischenschicht.

Unter einer eutektischen Lötverbindung ist eine relativ niedrig schmelzende Metallegierung, in diesem Fall aus Silber und Aluminium zu verstehen. Das Aluminium setzt den Schmelzpunkt des Silbers herab, so daß schon bei Temperaturen deutlich unterhalb des Schmelzpunktes von reinem Silber durch diese Lötverbindung eine stoffschlüssige Verbindung erzielt werden kann.

Diese Lötverbindung ist elektrisch leitend und weist regelmäßig eine sehr gute Haftung zur Komponente B auf.

In einer vorteilhaften Ausgestaltung des Verfahrens weist die gebildete eutektische Schicht eine Dicke von weniger als 0,05 mm, insbesondere von weniger als 0,03 mm auf.

Diese Ausgestaltung kann auf einfache Weise durch eine Aluminium aufweisende Zwischenschicht in Form einer Aluminiumfolie erzielt werden. Vorteilhafte Folienstärken sind dabei im Bereich von weniger als 0,02 mm.

Das erfindungsgemäße Silberkontaktelement kann beispielsweise ein Silbernetz sein. Geeignete Silbernetze weisen eine Maschenweite von weniger als 2 mm, insbesondere weniger als 1 mm auf. Die Drahtstärke beträgt vorteilhaft weniger als 0,5 mm, insbesondere weniger als 0,35 mm.

In einer vorteilhaften Ausführungsform des Verfahrens nach Anspruch 1 wird als metallisches Substrat eine bipolare Platte einer Brennstoffzelle eingesetzt. Diese ist metallisch ausgebildet und umfaßt beispielsweise eine AL₂O₃ bildende Legierung.

Eine weitere Ausführungsform setzt als metallisches Substrat eine Anode einer Brennstoffzelle ein, wobei diese vorteilhaft aus einem Cermet gebildet wird.

Als Anwendungsgebiet des erfindungsgemäßen Verfahrens ist insbesondere die Herstellung einer Brennstoffzelle zu nennen. Der langzeitstabile elektrische Kontakt zwischen den metallischen Substraten, insbesondere einer bipolaren Platte und/oder einer Elektrode, insbesondere einer Anode, durch ein elektrisch leitendes eutektisches Ag-Al-Lötsystem, kann vorteilhaft durch das erfindungsgemäße Verfahren realisiert werden.

Der Einsatz eines Silbernetzes als Silberkontaktelement in einer Brennstoffzelle ist in besonderer Weise dazu geeignet, die erforderliche elektrische Kontaktierung zwischen einer bipolaren Platte und einer Elektrode zu bilden. Gleichzeitig wird durch die Netzstruktur ein Brennstofftransport zwischen Elektrode und bipolarer Platte gewährleistet.

Am Beispiel einer Hochtemperatur-Brennstoffzelle, SOFC, wird die Erfindung im Folgenden nochmals näher erläutert.

Hochtemperatur-Brennstoffzellen (SOFC) werden zu Stapeln, bestehend aus Brennstoffzellen und bipolaren Platten, nachfolgend als Stapelelemente bezeichnet, gefügt. Metallische bipolare Platten mit hohen Cr-Gehalten bilden leitende Cr-Oxid-Deckschichten und führen zu Alterungseffekten in der Brennstoffzelle durch Verdampfung von Cr. Werkstoffe mit hohen Aluminiumgehalt bilden Al₂O₃-Deckschichten, die elektrisch isolieren. Es gibt zur Zeit keine Möglichkeit, bei Verwendung einer metallischen bipolaren Platte, eine Kontaktschicht zur Kathode herzustellen, die den Ansprüchen bezüglich Alterungsverhalten gerecht wird.

Silber als potentiell geeignete Kontaktschicht ist dem Fachmann bekannt. In Kombination mit metallischen bipolaren Platten gibt es hier bisher jedoch das Problem der Ausbildung von Grenzflächenreaktionen zwischen Kontaktschicht und bipolarer Platte dergestalt, daß sich isolierende Zwischenschichten bilden.

Für den Einsatz von hoch aluminiumhaltigen Stählen gibt es bisher keine Möglichkeit, einen dauerhaft leitfähigen Kontakt insbesondere auf der Kathodenseite herzustellen. Derartige Stähle wären als bipolare Platte deshalb interessant, weil keine schädlichen Cr-Oxid-Dämpfe die Kathode schädigen würden. Neben dem Kontaktierungsproblem würde gleichzeitig ein großer Teil des Alterungsproblems gelöst.

Im Rahmen der Erfindung wurde gefunden, daß bezüglich des Einsatzes an der Anode ein leitfähiger und Toleranz ausgleichender Lötverbund (Lötsystem) erforderlich ist. Bei Verwendung von Silber als Kontaktschicht stellte sich die Aufgabe, das Silber bei Temperaturen deutlich unter der Schmelztemperatur von Silber stoffschlüssig mit der bipolaren Platte zu verbinden, wobei gleichzeitig die Beständigkeit der Verbindung unter Betriebsbedingungen gewährleistet sein muß. Konventionelle Lötsysteme, z. B. auf Nickelbasis erfüllen diese Bedingung nicht.

Im Rahmen der Erfindung wurde eine Methode zur stoffschlüssigen Verbindung zwischen kathodenseitigen und anodenseitigen Silberkontaktelementen und der metallischen bipolaren Platte der SOFC geschaffen. Über ein Silberkontaktelement kann zudem eine stoffschlüssige Verbindung zwischen Anode und der bipolaren Platte erhalten werden.

Es folgen einige Ausführungsbeispiele des erfindungsgemäßen Verfahrens:
1. Herstellung einer stoffschlüssigen Verbindung zwischen einem Silberkontaktelement und einer metallischer bipolaren Platte durch eine Al-Zwischenschicht (Aluminiumfolie), die während des Fügeprozesses in-situ mit dem Silberkontaktelement ein Ag-Al-Lötsystem bildet, welches durch eine geeignete Prozeßführung eine hohe Temperaturbeständigkeit erhält. Der Fügeprozeß ist ein Ofenprozeß im Vakuum. Das Aluminium wird dabei vollständig im Silber gelöst und scheidet sich bei der Abkühlung teilweise wieder aus. Bei Einsatz in Luft kommt es zur Oxidation und damit zur Abbindung des Aluminiums im Silber, so daß sich keine schädlichen geschlossenen Deckschichten bilden können.
2. Analog wie bei 1. Zusätzlich wird einer Al-Zwischenschicht zwischen dem Silberkontaktelement und einem Anoden- Cermet eingebracht, so daß sich damit eine stoffschlüssige Verbindung zwischen der bipolaren Platte und dem Anoden-Cermet ausbildet.

## Patentansprüche

1. Verfahren zur Herstellung eines elektrisch leitenden Kontaktes auf einem metallischen Substrat mit den Schritten
- auf dem metallischen Substrat wird eine Aluminium aufweisende Schicht angeordnet,
- auf dieser wird ein Silberkontaktelement aufgebracht,
- diese drei Komponenten werden unter Vakuum derart erhitzt, daß sich aus dem Aluminium der Zwischen schicht und dem Silber des Silberkontaktelements eine elektrisch leitende Kontaktschicht bildet, die ein eutektisches Ag-Al-Lötsystem umfaßt.

2. Verfahren nach vorhergehendem Anspruch, bei dem das gebildete Lötsystem eine Schichtdicke von weniger als 0,05 mm ausbildet.

3. Verfahren nach vorhergehendem Anspruch, bei dem das gebildete Lötsystem eine Schichtdicke von weniger als 0,03 mm ausbildet.

4. Verfahren nach einem der vorhergehenden Ansprüche, bei dem eine Aluminiumfolie als Aluminium aufweisende Zwischenschicht eingesetzt wird.

5. Verfahren nach einem der vorhergehenden Ansprüche, bei dem eine Aluminium aufweisende Zwischenschicht mit einer Dicke von weniger als 0,02 mm eingesetzt wird.

6. Verfahren nach einem der vorhergehenden Ansprüche, bei dem ein Silbernetz als Silberkontaktelement (A) eingesetzt wird.

7. Verfahren nach vorhergehendem Anspruch, bei dem ein Silbernetz mit einer Maschenweite von weniger als 2 mm, insbesondere einer Maschenweite von ca. 1 mm eingesetzt wird.

8. Verfahren nach einem der vorhergehenden Ansprüche 6 bis 7, bei dem ein Silbernetz mit einer Netzstärke von weniger als 0,5 mm, insbesondere von weniger als 0,35 mm eingesetzt wird.

9. Verfahren nach vorhergehendem Anspruch, wobei eine bipolare Platte umfassend eine Al₂O₃ Legierung als metallisches Substrat eingesetzt wird.

10. Verfahren nach vorhergehendem Anspruch, bei dem eine ein Cermet umfassende Anode als metallisches Substrat eingesetzt wird.

## Claims

1. Method for producing an electrically conducting contact on a metallic substrate with the steps
- a layer with aluminium is arranged on the metallic substrate,
- a silver contact element is applied thereto,
- these three components are heated in a vacuum in such a way that an electrically conducting contact layer is formed from the aluminium of the intermediate layer and the silver of the silver contact element, said contact layer incorporating an eutectic Ag-Al soldering system.

2. Method according to the preceding claim, in which the soldering system formed has a layer thickness of less than 0.05 mm.

3. Method according to the preceding claim, in which the soldering system formed has a thickness of less than 0.03 mm.

4. Method according to one of the preceding claims, in which an aluminium foil is used as the intermediate layer containing aluminium.

5. Method according to one of the preceding claims, in which an intermediate layer containing aluminium with a thickness of less than 0.02 mm is used.

6. Method according to one of the preceding claims, in which a silver mesh is used as the silver contact element (A).

7. Method according to the preceding claim, in which a silver mesh with a mesh size of less than 2 mm, particularly a mesh size of approx. 1 mm is used.

8. Method according to one of the preceding claims 6 to 7, in which a silver mesh with a mesh thickness of less than 0.5 mm, particularly less than 0.35 mm is used.

9. Method according to the preceding claim, in which a bi-polar plate incorporating an Al₂O₃ alloy is used as the metallic substrate.

10. Method according to the preceding claim, in which an anode incorporating a cermet is used as the metallic substrate.

## Revendications

1. Procédé de fabrication d'un contact électro-conducteur sur un substrat métallique, comportant les étapes suivantes :
- sur le substrat métallique, on dispose une couche comprenant de l'aluminium,
- sur celle-ci, on dépose un élément de contact en argent,
- ces trois composants sont chauffés sous vide de manière à ce qu'une couche de contact électroconductrice, qui comprend un système de brasage Ag-Al eutectique, se forme à partir de l'aluminium de la couche intermédiaire et de l'argent de l'élément de contact en argent.

2. Procédé selon la revendication précédente, dans lequel le système de brasage formé constitue une épaisseur de couche de moins de 0,05 mm.

3. Procédé selon la revendication précédente, dans lequel le système de brasage formé constitue une épaisseur de couche de moins de 0,03 mm.

4. Procédé selon l'une des revendications précédentes, dans lequel une feuille d'aluminium est utilisée comme couche intermédiaire comprenant de l'aluminium.

5. Procédé selon l'une des revendications précédentes, dans lequel une couche intermédiaire comprenant de l'aluminium, ayant une épaisseur de moins de 0,02 mm, est utilisée.

6. Procédé selon l'une des revendications précédentes, dans lequel un filet en argent est utilisé comme élément de contact en argent (A).

7. Procédé selon la revendication précédente, dans lequel un filet en argent ayant une largeur de maille de moins de 2 mm, en particulier une largeur de maille d'environ 1 mm, est utilisé.

8. Procédé selon l'une des revendications précédentes 6 à 7, dans lequel un filet en argent ayant une épaisseur de filet de moins de 0,5 mm, en particulier de moins de 0,35 mm, est utilisé.

9. Procédé selon la revendication précédente, dans lequel une plaque bipolaire comprenant un alliage en Al₂O₃ est utilisée comme substrat métallique.

10. Procédé selon la revendication précédente, dans lequel une anode comprenant un cermet est utilisée comme substrat métallique.
